# EUROPEAN PATENT APPLICATION

(11) **EP 2 975 215 A1**
(43) Date of publication of application: **20.01.2016**
(21) Application number: 15176864.5
(22) Date of filing: 15.07.2015
(51) Int. Cl.: F01D 5/14, B23P 15/04, F01D 9/04, F23R 3/00

(54) **METHOD OF CREATING HEAT TRANSFER FEATURES IN HIGH TEMPERATURE ALLOYS**

(30) Priority: 17.07.2014 US 201462025519 P
(71) Applicant: United Technologies Corporation, Hartford, CT 06101 (US)
(72) Inventor: SPANGLER, Brandon W., Vernon, CT 06066 (US); BERCZIK, Douglas M., Manchester, CT 06042 (US)
(74) Representative: Leckey, David Herbert

(57) **Abstract**

A method for forming a gas turbine engine component comprises the steps of forming a first portion (100) from a high temperature alloy material, and forming a second portion (102) from the high temperature alloy material, the first and second portions (100,102) each defining an external surface and an internal surface (142). At least one heat transfer feature (108) is formed directly on the internal surface of at least one of the first and second portions (108). The first and second portions are attached together to form a component.

## Description

### BACKGROUND OF THE INVENTION

In pursuit of higher engine efficiencies, higher turbine inlet temperatures have been relied upon to boost overall engine performance. This can result in gas path temperatures that may exceed melting points of traditional turbine component materials. To address this issue, airfoils for rotating blades and stator vanes, for example, are made from materials that can withstand higher operating temperatures, such as high temperature alloys.

When using traditional materials for the airfoils, such as a nickel alloy material for example, additional internal cooling is required. In one known configuration, internal cooling passages are formed within the airfoils. To further augment this internal cooling, the internal cooling passages in some nickel alloy airfoils have been configured to include heat transfer treatments such as trip strips formed on passage walls. When using high temperature alloy materials, forming internal cooling passages and providing additional heat transfer features to augment internal cooling has proven to be challenging.

### SUMMARY OF THE INVENTION

In a featured embodiment, a method for forming a gas turbine engine component comprises the steps of forming a first portion from a high temperature alloy material, and forming a second portion from the high temperature alloy material, the first and second portions each defining an external surface and an internal surface. At least one heat transfer feature is formed directly on the internal surface of at least one of the first and second portions. The first and second portions are attached together to form a component.

In an embodiment according to the previous embodiment, the high temperature alloy material can withstand operating temperatures within a range of 2200-2700 degrees Fahrenheit (1316-1482°C).

In another embodiment according to any of the previous embodiments, the high temperature alloy material includes molybdenum, and the high temperature material is comprised of an alloy having greater than 90% molybdenum by weight.

In another embodiment according to any of the previous embodiments, forming a first portion from a high temperature alloy material includes forging a block comprised of the high temperature alloy material and cutting the block into the first portion and the second portion.

Another embodiment according to any of the previous embodiments includes machining the external surfaces of the first and second portions subsequent to attaching the first and second portions together to form a component to provide a finished component.

In another embodiment according to any of the previous embodiments, attaching the first and second portions together to form a component to provide a finished component includes diffusion bonding the first and second portions together.

In another embodiment according to any of the previous embodiments, attaching the first and second portions together to form a component to provide a finished component includes TLP bonding the first and second portions together.

In another embodiment according to any of the previous embodiments, forming at least one heat transfer feature directly on the internal surface of at least one of the first and second portions includes machining a plurality of heat transfer features directly onto the internal surface of both the first and second portions.

In another embodiment according to any of the previous embodiments, the heat transfer features comprise at least one of pin fins, trip strips, deptowarts, pedestals, or cooling holes.

In another embodiment according to any of the previous embodiments, forming at least one heat transfer feature directly on the internal surface of at least one of the first and second portions includes machining the heat transfer features in a direction that is generally transverse to the internal surface.

In another embodiment according to any of the previous embodiments, forming at least one heat transfer feature directly on the internal surface of at least one of the first and second portions includes machining the heat transfer features using a plunging electrode or waterjet.

In another embodiment according to any of the previous embodiments, the component comprises one of a gas turbine engine blade, vane, BOAS, or combustor panel.

In another featured embodiment, a component for a gas turbine engine has a first portion formed from a high temperature alloy material and having a first attachment interface. A second portion is formed from the high temperature alloy material and has a second attachment interface. The first and second portions each define an external surface and an internal surface. At least one heat transfer feature is formed directly on the internal surface of at least one of the first and second portions. The first and second portions are attached to each other via the first and second attachment interfaces to form the component.

In an embodiment according to the previous embodiment, the high temperature alloy material can withstand operating temperatures within a range of 2400-2700 degrees Fahrenheit (1316-1482°C).

In another embodiment according to any of the previous embodiments, the high temperature alloy material includes molybdenum.

In another embodiment according to any of the previous embodiments, when the first and second attachment interfaces are attached to each other, the first and second attachment interfaces comprise a diffusion bonded interface.

In another embodiment according to any of the previous embodiments, when the first and second attachment interfaces are attached to each other, the first and second attachment interfaces comprise a TLP bonded interface.

In another embodiment according to any of the previous embodiments, a plurality of heat transfer features are formed directly onto the internal surface of both the first and second portions.

In another embodiment according to any of the previous embodiments, the heat transfer features comprise at least one of pin fins, trip strips, deptowarts, pedestals, or cooling holes.

In another embodiment according to any of the previous embodiments, the component comprises one of a gas turbine engine blade, vane, BOAS, or combustor panel.

The foregoing features and elements may be combined in any combination without exclusivity, unless expressly indicated otherwise.

These and other features may be best understood from the following drawings and specification.

### BRIEF DESCRIPTION OF THE DRAWINGS

Figure 1 is a schematic representation of one example of a gas turbine engine.
Figure 2 is a side perspective view of a turbine blade.
Figure 3A is a schematic cross-sectional view of an airfoil section of the blade of Figure 2 formed as two pieces.
Figure 3B is a view similar to 3A but showing the two pieces attached to each other.
Figure 4 is a flow chart describing the method of forming the airfoil section.

### DETAILED DESCRIPTION

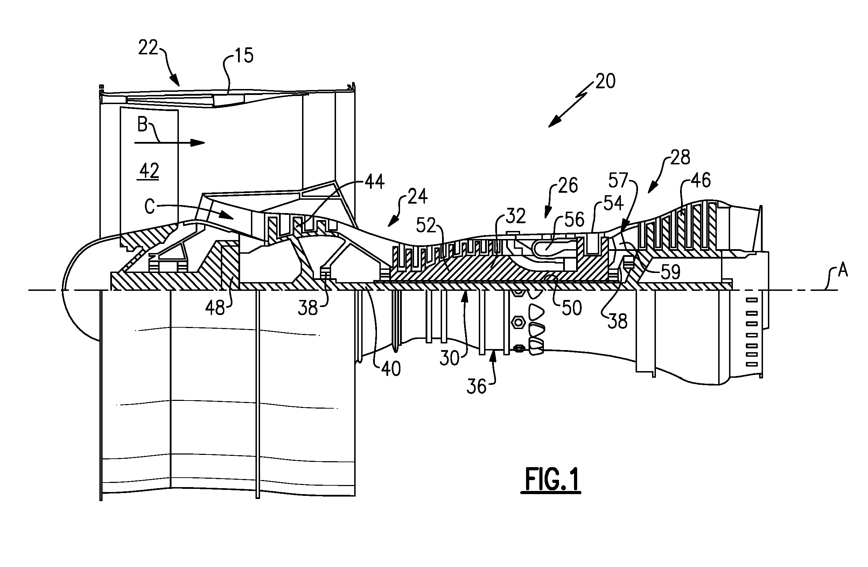

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a second (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a first (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

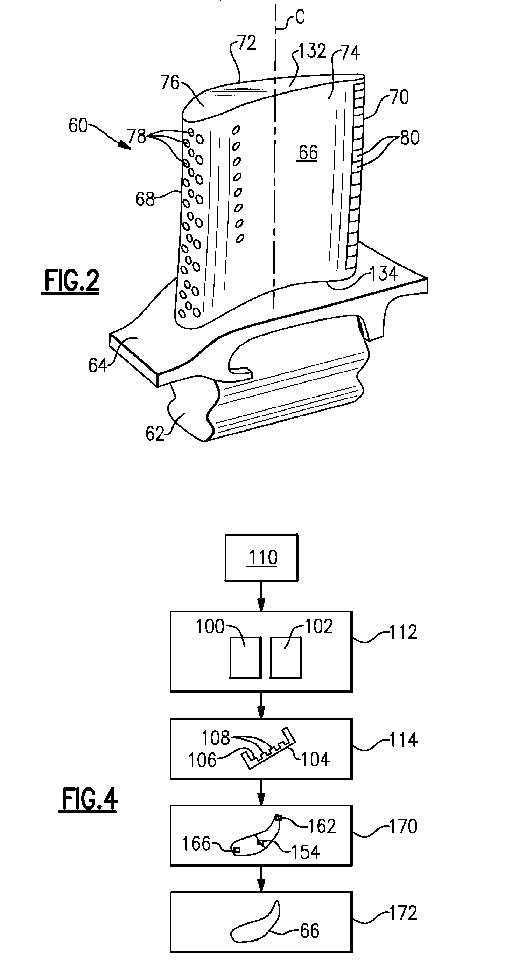

Airfoils located downstream of the combustor section 26, such as stator vanes and rotor blades in the turbine section 28 for example, operate in a high-temperature environment. Airfoils that are exposed to high temperatures typically include cooling circuits with internal cooling channels that direct a flow of cooling air through the airfoil to remove heat and prolong the useful life of the airfoil. Figure 2 is a side view of a turbine rotor blade 60 having a root section 62, a platform 64, and an airfoil section 66. Root section 62 is connected to a rotor in the turbine section 28 (Figure 1) as known. The airfoil section 66 includes a leading edge 68, a trailing edge 70, a suction side wall 72, and a pressure side wall 74. The airfoil section 66 extends to a tip 76. In one example, the airfoil section 66 can optionally include a plurality of surface cooling holes, such as film cooling holes 78, and/or a plurality of trailing edge cooling slots 80. Although a blade is discussed in this disclosure, it should be understood that the invention also applies to other engine hardware, such as vanes, BOAS, combustor panels, etc.

The platform 64 connects one end of airfoil section 66 to root section 62. The leading edge 68, trailing edge 70, suction side wall 72, and pressure side wall 74 extend outwardly away from the platform 64. The tip 76 closes off an opposite end of the airfoil section 66 from the platform 64. Suction side wall 72 and pressure side wall 74 connect leading edge 68 and trailing edge 70. In one example, film cooling holes 78 are arranged over a surface of the airfoil section 66 to provide a layer of cool air proximate the surface of airfoil section 66 for protection from high-temperature combustion gases. Also, the trailing edge cooling slots 80 can be arranged along trailing edge 70 to provide an exit for air circulating within airfoil section 66.

Due to the high operating temperatures to which the blades 60 are subject to, the invention utilizes a high temperature alloy material, such as molybdenum for example, to form the air foil section 66 or the entire blade 60. In one example, the high temperature material is comprised of an alloy having greater than 90% molybdenum by weight. This material could also be used to form other gas turbine engine components such as vanes, combustor panels, and blade outer air seals (BOAS). It should be understood that molybdenum is only one example of a high temperature alloy material that could be used. Any other high temperature alloy materials suitable for forming gas turbine engine components could also be used such as monolithic ceramic material, or a ceramic matrix composite material, for example. The high temperature alloy material can withstand operating temperatures within a range of 2400-2700 degrees Fahrenheit (1316-1482 degrees Celsius), which is a much higher range than traditional airfoil materials can withstand. Traditional materials, such as a nickel alloy material for example, can only withstand temperatures up to 2200 degrees Fahrenheit (1204 degrees Celsius).

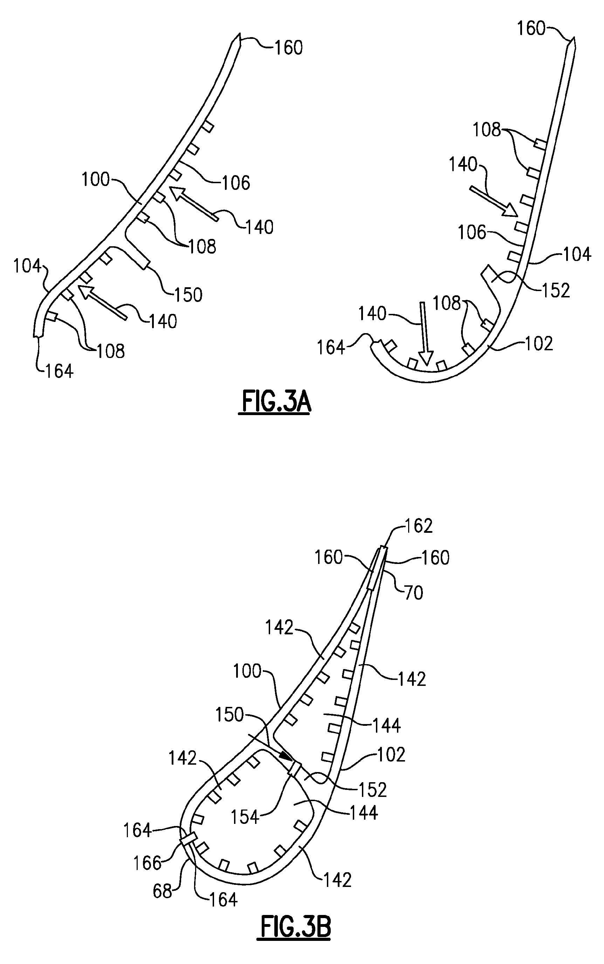

As shown in Figure 3A, the blade is made by forming at least a first portion 100 and a second portion 102 from a high temperature alloy material. The first 100 and second 102 portions each define an external surface 104 and an internal surface 106. At least one heat transfer feature 108 is formed directly on the internal surface 106 of the first 100 and second 102 portions. Once all of the heat transfer features 108 are formed on the internal surfaces 106, the first 100 and second 102 portions are attached together to form the component.

As shown in Figure 4, first a block 110 comprised of the high temperature alloy material is forged as one piece. Any type of forging process can be used to form the block 110. Next, as indicated at 112, the block 110 is cut into the first portion 100 and the second portion 102. Next, as indicated at 114, one or more heat transfer features 108 are machined directly onto the internal surface 106 of both the first 100 and second 102 portions. As such, the heat transfer features 108 are integrally formed into the internal wall surface 106, which significantly increase the cooling capability of the airfoil section 66. In one example, the heat transfer features 108 can comprise at least one of pin fins, trip strips, for example V-shaped trip strips, rounded protrusions, for example deptowarts, pedestals, dimples or cooling holes. The example of Figures 3A-3B show pin fins. Examples of other heat transfer features, formed within an insert, are shown in co-pending application serial number 62/024,518 assigned to the assignee of the subject invention, and which is hereby incorporated by reference. While the co-pending application shows the heat transfer features formed within an insert, the subject invention forms the heat transfer features directly within the internal wall surface as shown with the integrally formed pin fins of Figure 3A.

The airfoil section 66 defines a center axis C (Figure 2) extending in a direction from an outer diameter surface 132 to an inner diameter surface 134. Because the airfoil section 66 is initially formed as first 100 and second 102 portions, the heat transfer features 108 can be machined in a direction that is generally transverse to the center axis C, as indicated at 140 in Figure 3A. The heat transfer features 108 can be machined using a plunging or wire electrical discharge machining (EDM) process, or by using a water-jetting process, for example.

The first 100 and second 102 portions each include internal surface areas 142 that form part of one or more cooling passages 144 (Figure 3B). For example, one internal surface area 142 on the first portion 100 forms one portion of a cooling passage 144 while the opposing internal surface area 142 on the second portion 102 forms the remaining portion of the cooling passage 144 when the first 100 and second 102 portions are attached to each other as shown in Figure 3B.

The first portion 100 includes one or more first internal wall extensions 150 that extend outwardly from the internal wall surface 106 toward the center of the airfoil section 66. The second portion 102 includes one or more second internal wall extensions 152 that extend outwardly from the internal wall surface 106 toward the center of the airfoil section 66. When the first 100 and second 102 portions are attached to each other, a distal end face of the first internal wall extension 150 abuts directly against a distal end face of the second internal wall extension 152. This interface divides the open area within the airfoil section 66 into at least two open cavities, i.e. the cooling passages 144. Additional wall extensions could also be formed on the internal surface 106 to further sub-divide the internal open area as needed.

The contact between the first 150 and second 152 internal wall extensions forms one attachment interface 154 between the first 100 and second 102 portions. At the trailing edge 70, each of the first 100 and second 102 portions include a contact surface 160 that abut directly against each other to form another attachment interface 162. At the leading edge 68, each of the first 100 and second 102 portions include a contact surface 164 that abut directly against each other to form another attachment interface 166.

Once all of the internal machining has been completed, the first 100 and second 102 portions are attached to each other at the three attachment interfaces 154, 162, 166 as indicated at170 in Figure 4. The corresponding portions of the portions 100, 102 are placed into direct contact with each other at the leading edge 68, trailing edge 70 and internal wall extensions 150, 152, and the portions 100, 102 are permanently fixed together. In one example, a diffusion bonding process is used to fix the portions 100, 102 to each other. Other attachment methods could also be used, such as transient liquid phase (TLP) bonding. Further, while two portions 100, 102 are disclosed, the blade 60 or airfoil section 66 could be formed from more than two portions.

Once the first 100 and second 102 portions are attached to each other, the external surfaces 104 of the first 100 and second 102 portions are machined to provide a finished component as indicated at 172. This may include machining the film cooling holes and/or cooling slots 80, as needed, for example when an airfoil section 66 is being formed. The airfoil section 66 can then be used as part of a gas turbine engine blade or vane, for example.

When using a single block of material, the engine components have to be machined to their final shape using line of sight processes such as plunge EDM, wire EDM, or water-jetting, for example. Thus, the internal cooling passages are only accessible for machining via the inner or outer diameter of the airfoil. As such, these processes move generally parallel to the walls to form smooth wall surfaces. By creating the component in two or more pieces and diffusion bonding the pieces together, the machining processes can move substantially perpendicular to the wall, allowing internal heat transfer features to be created on the internal cavity walls.

Forming the heat transfer features directly into the wall provides the most effective heat transfer and significantly increases the cooling capability. Forming the heat transfer features directly on the internal wall of an engine component formed from a high temperature alloy can only be accomplished by creating the airfoil in multiple pieces and subsequently bonding the pieces together.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A method for forming a gas turbine engine component (60) comprising the steps of:
(a) forming a first portion (100) from a high temperature alloy material;
(b) forming a second portion (102) from the high temperature alloy material, the first and second portions (100,102) each defining an external surface and an internal surface (142);
(c) forming at least one heat transfer feature (108) directly on the internal surface (142) of at least one of the first and second portions (100,102); and
(d) attaching the first and second portions (100,102) together to form a component (60).

2. The method according to claim 1 wherein step (a) includes forging a block (110) comprised of the high temperature alloy material and cutting the block into the first portion (100) and the second portion (102).

3. The method according to claim 2 including machining the external surfaces of the first and second portions (100,102) subsequent to step (d) to provide a finished component (60).

4. The method according to any preceding claim wherein step (d) includes diffusion bonding the first and second portions (100,102) together.

5. The method according to any of claims 1 to 3 wherein step (d) includes TLP bonding the first and second portions (100,102) together.

6. The method according to any preceding claim wherein step (c) includes machining a plurality of heat transfer features (108) directly onto the internal surface (142) of both the first and second portions (100,102).

7. The method according to claim 6 wherein step (c) includes machining the heat transfer features in a direction that is generally transverse to the internal surface.

8. The method according to claim 6 or 7 wherein step (c) includes machining the heat transfer features using a plunging electrode or waterjet.

9. A component (60) for a gas turbine engine comprising:
a first portion (100) formed from a high temperature alloy material and having a first attachment interface (150);
a second portion (102) formed from the high temperature alloy material and having a second attachment interface (152), the first and second portions (100,102) each defining an external surface and an internal surface (142);
at least one heat transfer feature (108) formed directly on the internal surface (142) of at least one of the first and second portions (100,102); and
the first and second portions (100,102) being attached to each other via the first and second attachment interfaces (150,152) to form the component (60).

10. The component according to claim 9 wherein, when the first and second attachment interfaces are attached to each other, the first and second attachment interfaces comprise a diffusion bonded interface or a TLP bonded interface.

11. The component according to claim 9 or 10 wherein a plurality of heat transfer features (108) are formed directly onto the internal surface (142) of both the first and second portions (100,102).

12. The method or component according to any preceding claim wherein the high temperature alloy material can withstand operating temperatures within a range of 2400-2700 degrees Fahrenheit (1316-1482°C).

13. The method or component according to claim 12 wherein the high temperature alloy material includes molybdenum, wherein, optionally, the high temperature material is comprised of an alloy having greater than 90% molybdenum by weight.

14. The method or component according to any preceding claim wherein the heat transfer features (108) comprise at least one of pin fins, trip strips, deptowarts, pedestals, or cooling holes.

15. The method or component according to any preceding claim wherein the component (60) comprises one of a gas turbine engine blade, vane, BOAS, or combustor panel.
